# EUROPÄISCHE PATENTANMELDUNG

(11) **EP 3 715 114 A1**
(43) Veröffentlichungstag der Anmeldung: **30.09.2020**
(21) Anmeldenummer: 20161397.3
(22) Anmeldetag: 06.03.2020
(51) Int. Cl.: B32B 27/12, B29C 48/08, B32B 1/08, B32B 5/02, B32B 27/08, B32B 27/30, B32B 27/32, B65D 33/00, B65D 65/40

(54) **VERPACKUNGSBEUTEL AUS EINEM KUNSTSTOFFGEWEBEVERBUND**

(30) Priorität: 25.03.2019 DE 102019107619
(71) Anmelder: Mondi AG, 1030 Wien (AT)
(72) Erfinder: KÖSTERS, Jens, 49134 Wallenhorst (DE)
(74) Vertreter: Andrejewski - Honke Patent- und Rechtsanwälte Partnerschaft mbB

(57) **Zusammenfassung**

Die Erfindung betrifft einen Verpackungsbeutel aus einem Kunststoffgewebeverbund (1) mit einem aus sich kreuzenden Folienbändchen (2a, 2b) gebildeten Bändchengewebe (2) und mit einer Außenfolie (3) aus orientiertem Polyolefin. Erfindungsgemäß ist in den Kunststoffgewebeverbund (1) eine Beschichtung (6a, 6b) aus Acrylat eingebunden, wobei die Beschichtung (6a, 6b) auf der Außenfolie (3) angeordnet ist, oder zwischen der Außenfolie (3) und dem Bändchengewebe (2) eine Innenfolie (5) aus orientiertem Polyolefin vorgesehen und die Beschichtung (6a, 6b) zumindest auf einer der Außenfolie (3) zugewandten Seite der Innenfolie (5) angeordnet ist.

## Beschreibung

Die Erfindung betrifft einen Verpackungsbeutel aus einem Kunststoffgewebeverbund mit einem aus sich kreuzenden Folienbändchen gebildeten Bändchengewebe und mit einer Außenfolie aus orientiertem Polyolefin.

Derartige Verpackungsbeutel sind insbesondere für Großgebinde geeignet, die ein erhebliches Füllvolumen und ein erhebliches Füllgewicht aufweisen. Durch die einzelnen, einander kreuzenden Bändchen des Bändchengewebes können sehr große Belastungen aufgenommen werden. Zu seiner besonders hohen Stabilität trägt bei, dass auch die Folienbändchen in der Regel orientiert sind. Selbst bei einer lokalen Beschädigung des Kunststoffgewebeverbundes kann durch die einzelnen Folienbändchen ein Weiterreißen verhindert werden.

Besondere Vorteile ergeben sich durch den Verbund des Bändchengewebes mit der Außenfolie, wobei sich die unterschiedlichen mechanischen Eigenschaften ergänzen.

Die Außenfolie bildet eine glatte, hochwertige Oberfläche, die auch mit einem Konterdruck versehen sein kann. Bei der Herstellung des Kunststoffgewebeverbundes wird das Bändchengewebe als vorgefertigtes Vorprodukt zugeführt und dann mit der in der Regel ebenfalls vorgefertigten Außenfolie verbunden. Dabei ist zu beachten, dass der übliche Kaschierungsprozess sich grundlegend von der eigentlichen Folienherstellung in großen Extrusionsanlagen unterscheidet, wobei im Rahmen der Erfindung die Folie, welche die Folienbändchen bindet, sowie die Außenfolie sowohl durch Blasfolienextrusion als auch Flachfolienextrusion gebildet sein können.

Derartige Verpackungsbeutel können in unterschiedlichen Ausgestaltungsformen bereitgestellt werden, wobei insbesondere ein Seitenfaltenbeutel eine große Füllmenge bereitstellen kann. Eine solche Ausgestaltung ist auch von der vorliegenden Erfindung umfasst.

Ein Verpackungsbeutel mit einem derartigen Kunststoffgewebeverbund ist grundsätzlich aus der EP 3 290 206 A1 oder der EP 3 299 312 A1 bekannt.

Aufgrund der guten mechanischen Eigenschaften sowie der Gewährleistung einer dichten Abschottung gegenüber der Umgebung durch die Außenfolie werden derartige Verpackungsbeutel vor allem zur Verpackung von Nahrungsmitteln insbesondere zur Verpackung von Tiernahrungsmitteln eingesetzt.

Hierbei hat sich gezeigt, dass bei fortgeschrittener Lagerungsdauer Insekten, wie die Necrobia oder die Plodia interpunctella, in der Lage sind, durch die Verpackung in das Produkt zu gelangen.

Um diesem Problem entgegenzuwirken, wurde in der Vergangenheit vorgeschlagen, Insekten durch Beimischung geeigneter Additive in einer Folienschicht von einem solchen Verpackungsbeutel fernzuhalten. Eine derartige Lösung wird beispielsweise in der EP 2 857 17 A1 beschrieben, bei der eine chemische Substanz als Additiv in die polymere Zusammensetzung der Folie eingebracht wird, die auf Insekten abstoßend wirkt, ohne ihnen zu schaden. Eine solche chemische Substanz kann beispielsweise "Citronella" sein. Die Beimischung derartiger Additive hat allerdings den Nachteil, dass die chemischen Substanzen auch auf die verpackten Nahrungsmittel einen nachteiligen Effekt ausüben können. Insbesondere gehen derartige chemische Substanzen oftmals mit einer bestimmten Geruchsentwicklung einher, die nicht nur in Bezug auf die verpackten Nahrungsmittel von Nachteil ist, sondern auch von dem potentiellen Käufer eines solchen Produktes als unangenehm empfunden werden kann.

Die Aufgabe der vorliegenden Erfindung besteht deshalb darin, einen Verpackungsbeutel der eingangs beschriebenen Art anzugeben, der sich einerseits durch einen möglichst einfachen Aufbau auszeichnet und bei dem andererseits das Eindringen von Insekten verhindert wird.

Diese Aufgabe wird gelöst durch einen Verpackungsbeutel gemäß Anspruch 1. Demnach ist eine Beschichtung aus Acrylat in dem Kunststoffgewebeverbund vorgesehen. Erfindungsgemäß haben sich zwei Ausgestaltungsformen als besonders geeignet herausgestellt. Entweder ist die Beschichtung auf der Außenfolie angeordnet oder zwischen der Außenfolie und dem Bändchengewebe ist eine Innenfolie aus orientiertem Polyolefin vorgesehen, wobei dann die Beschichtung zumindest auf einer der Außenfolie zugewandten Seite der Innenfolie angeordnet ist.

Es hat sich überraschenderweise herausgestellt, dass eine solche Beschichtung aus Acrylat das Eindringen von Insekten wirksam verhindert. Hierbei wird angenommen, dass diese Insekten ein Sekret absondern, welches in der Außenfolie aus Polyolefin mikroskopische Beschädigungen hervorruft, durch die die Insekten durch den Kunststoffgewebeverbund in den Verpackungsbeutel gelangen können.

Dieses Sekret der Insekten ist wie auch das Material der Außenfolie unpolar. Unter der Polarität wird in der Chemie eine durch Ladungsverschiebung in Atomgruppen entstandene Bildung von getrennten Ladungsschwerpunkten verstanden, die bewirken, dass eine Atomgruppe nicht mehr elektrisch neutral ist. Polare Stoffe bestehen aus polaren Molekülen, welche sich durch ein permanentes elektrisches Dipolmoment auszeichnen. Hierbei gilt der Grundsatz, dass sich polare Stoffe gut in polaren Lösungsmitteln lösen. Gleiches gilt jedoch auch für unpolare Stoffe und unpolare Lösungsmittel. Das unpolare Sekret dieser Insekten dient damit als Lösungsmittel für die unpolare Außenfolie aus orientiertem Polyolefin.

Bei Acrylaten handelt es sich um Polymere auf der Basis von Estern der Acrylsäure. Umfasst sind im Rahmen der Erfindung extrudierbare Acrylate, vorzugsweise Copolymere aus Ethylen und Acrylaten wie Ethylen-Butylacrylat-Copolymer (EBA), Ethylen-Ethylacrylat-Copolymer (EEA), Ethylen-Methacrylat-Copolymer (EMA) oder Ethylenacrylsäure-Copolymer (EAA). Hierbei ist die Besonderheit, dass die Estergruppe dem Acrylat eine starke Polarität verleiht, sodass sich in dem ansonsten unpolaren Kunststoffgewebeverbund eine Schicht mit hoher Polarität ausbildet. Diese polare Acrylschicht wirkt als Barriereschicht gegenüber dem unpolaren Sekret der Insekten.

Grundsätzlich kann die Beschichtung aus Acrylat an einer beliebigen Stelle des Kunststoffgewebeverbundes angeordnet sein, wobei aber bevorzugt eine Anordnung zwischen der Außenfolie und dem Bändchengewebe vorgesehen ist. Es liegt aber auch im Rahmen der Erfindung, die Beschichtung nach außen hin auf der Außenfolie oder aber auch nach innen hin auf dem Bändchengewebe in Form einer Siegelbeschichtung anzuordnen.

Das Acrylat wird in Form einer Beschichtung aufgebracht, wobei sich unterschiedliche Ausgestaltungsformen als geeignet herausgestellt haben. Grundsätzlich meint eine Beschichtung im Rahmen der Erfindung das Aufbringen einer dünnen, aber festhaftenden Schicht aus einem zunächst formlosen, z. B. flüssigen, Stoff. Die Dicke einer solchen Beschichtung liegt üblicherweise im Rahmen von 1 bis 10 µm. In der einfachsten Ausgestaltungsform wird diese Beschichtung unmittelbar auf die Außenfolie aufgebracht, wobei die Beschichtung bevorzugt auf der dem Bändchengewebe zugewandten Seite erfolgt. Dies hat den Vorteil, dass die Acrylatschicht zu keiner optischen Beeinträchtigung der Außenfolie führt. Das Aufbringen der Beschichtung erfolgt beispielsweise über einen Acrylat-Lack. Bei einem solchen Lack ist das Acrylat in einer Lösung gebunden, wobei der Lack auf eine vorgefertigte Folie aufgebracht wird. Alternativ kann die Beschichtung aus Acrylat auch unmittelbar mit der Außenfolie coextrudiert werden.

Die Außenfolie kann einen sogenannten Konterdruck aufweisen. Hierbei handelt es sich um eine auf der Außenfolie vorgenommene, vorzugsweise vollflächige, innenliegende Bedruckung. Somit erfolgt auch die Bedruckung der Außenfolie auf einer dem Bändchengewebe zugewandten Seite. In einem solchen Fall wird bevorzugt zunächst die Außenfolie innenseitig mit einer Bedruckung versehen, wobei dann auf der Bedruckung die Beschichtung aus Acrylat folgt. Somit weist der Kunststoffgewebeverbund des Verpackungsbeutels einen Schichtaufbau in der Reihenfolge - Außenfolie, Bedruckung, Beschichtung aus Acrylat, Bändchengewebe - auf. Durch diese Reihenfolge wird gewährleistet, dass die Bedruckung trotz der Beschichtung von außen sichtbar ist.

Alternativ kann die Beschichtung aus Acrylat auch unmittelbar auf der Außenfolie angeordnet sein, wobei dann innenliegende Bedruckung auf der Beschichtung aus Acrylat erfolgt. Demnach weist der Kunststoffgewebeverbund des Verpackungsbeutels einen Schichtaufbau in der Reihenfolge - Außenfolie, Beschichtung aus Acrylat, Bedruckung, Bändchengewebe - auf. Eine solche Ausgestaltung hat den besonderen Vorteil, dass die Bedruckung selbst ebenfalls vor dem unpolaren Sekret der Insekten geschützt ist, so dass auch bei einem Eindringen der Insekten in die Außenfolie die Bedruckung nicht zersetzt wird und ein optisch hochwertiges Erscheinungsbild aufrechterhalten wird. Zugleich kann die Außenfolie auch in einfacher Art und Weise mit der Beschichtung aus Acrylat vorgefertigt werden. So dass im Zuge der Herstellung des Kunststoffgewebeverbundes lediglich ein Zusammenfügen z.B. durch eine Extrusionskaschierung mit dem Bändchengewebe notwendig ist.

Alternativ kann auch die Bedruckung als Acrylatschicht ausgebildet sein bzw. Acrylat enthalten, wobei vorzugsweise ein Acrylat-Lack verwendet wird. In diesem Fall sollte die Bedruckung vollflächig erfolgen, um eine geschlossene polare Schicht bilden zu können.

Um die Außenfolie und das Bändchengewebe miteinander zu verbinden, ist eine Zwischenschicht vorgesehen, über die die Außenfolie und das Bändchengewebe extrusionskaschiert sind. Eine solche extrusionskaschierte Zwischenschicht wird schmelzflüssig zwischen das Bändchengewebe und die Außenfolie eingebracht. Wenn dann während des Kaschierprozesses der so gebildete Schichtaufbau insbesondere in einem Walzenspalt mit Druck beaufschlagt wird, kann die zunächst noch schmelzflüssige Zwischenschicht sich an die nicht vollständig ebene Struktur des Bändchengewebes anpassen und in einem gewissen Maße auch in Zwischenräume eindringen, wodurch eine besonders zuverlässige Verbindung und hohe Verbundhaftung erreicht werden kann.

Diese Zwischenschicht grenzt im Falle einer mit Acrylat beschichteten Außenfolie bevorzugt unmittelbar an die Beschichtung aus Acrylat an, sodass der Kunststoffgewebeverbund einen Schichtaufbau in der Reihenfolge - Außenfolie, Beschichtung aus Acrylat, Zwischenschicht, Bändchengewebe - aufweist. Im Falle einer Bedruckung ist diese vorzugsweise entweder zwischen der Beschichtung aus Acrylat und der Außenfolie oder zwischen der Beschichtung aus Acrylat und der Zwischenschicht angeordnet, wobei dann die Bedruckung die Beschichtung aus Acrylat und die Zwischenschicht voneinander trennt, so dass die Beschichtung insbesondere nicht als Haftvermittlerschicht fungieren kann. Als Material für die Zwischenschicht eignet sich insbesondere Polypropylen (PP).

Grundsätzlich führt eine Beschichtung aus Acrylat auf der Außenfolie zu einer bereits wirksamen Barriereschicht gegen das Eindringen von Insekten. Jedoch kann zwischen der Außenfolie und dem Bändchengewebe eine zusätzliche Innenfolie vorgesehen sein, die ebenfalls aus orientiertem Polyolefin gebildet ist. Diese Innenfolie dient dann als Trägerfolie für die Beschichtung aus Acrylat. Die Außenfolie kann somit unabhängig von der Beschichtung aus Acrylat hergestellt und beispielsweise mit einer rückseitigen Bedruckung bzw. einem Konterdruck versehen werden. Somit richtet sich der Herstellungsprozess der Außenfolie vor allem anhand optischer Kriterien, während die Barriereschicht gegenüber dem Eindringen von Insekten in einem separaten Herstellungsschritt über das Bereitstellen einer Innenfolie ermöglicht wird, auf die die Beschichtung aus Acrylat aufgebracht wird. Hierbei kann die Beschichtung grundsätzlich auf jeder der beiden Seiten der Außenfolie erfolgen. Sofern die Innenfolie auf beiden Seiten mit Acrylat beschichtet wird, ist gewährleistet, dass auch im Falle einer Beschädigung der Beschichtung, die Barriereschicht durch die beidseitige Ausgestaltung weiterhin wirksam ist.

Im Falle einer nur einseitigen Beschichtung ist diese vorzugsweise auf einer der Außenfolie zugewandten Seite der Innenfolie angeordnet. Dies hat den Vorteil, dass sichergestellt wird, dass im Falle einer Extrusionskaschierung die schmelzflüssige Zwischenschicht die Beschichtung aus Acrylat nicht beschädigen kann, da die Innenfolie einen ausreichenden Abstand zwischen der Beschichtung aus Acrylat und der Zwischenschicht gewährleistet.

Bei der Ausgestaltung mit einer Innenfolie als Trägermaterial für die Beschichtung aus Acrylat erfolgt somit zunächst die Beschichtung der Innenfolie und erst anschließend die Zusammenführung mit der Außenfolie. Bevorzugt kommt hierzu eine Kleberkaschierung zum Einsatz, sodass zwischen der Innenfolie und der Außenfolie oder zwischen der Beschichtung und der Außenfolie eine Klebstoffschicht angeordnet ist. Die genaue Anordnung der Klebstoffschicht ergibt sich aus der Ausgestaltung der Innenfolie bzw. der Anordnung der Beschichtung auf der Innenfolie. Sofern eine Beschichtung auf der dem Bändchengewebe zugewandten Seite der Innenfolie erfolgt, ist die Klebstoffschicht zwischen der Innenfolie und der Außenfolie angeordnet, wobei bei einer beidseitigen Beschichtung bzw. bei einer Beschichtung auf der dem Bändchengewebe abgewandten Seite, die Klebstoffschicht zwischen der Beschichtung und der Außenfolie angeordnet ist. Als Klebstoff kommt üblicherweise Polyurethan (PU) zum Einsatz.

Unabhängig von der Frage, ob die Beschichtung unmittelbar oder mittelbar auf die Außenfolie oder auf eine Innenfolie als Trägermaterial aufgebracht wird, erfolgt die Zusammenführung mit dem Bändchengewebe, wie bereits zuvor erläutert, bevorzugt in Form einer Extrusionskaschierung. Dies kann üblicherweise über eine einzelne Zwischenschicht erfolgen. Bevorzugt werden jedoch zwei Zwischenschichten zwischen der Außenfolie und dem Bändchengewebe bzw. zwischen der Innenfolie und dem Bändchengewebe aufgebracht, wobei eine erste Zwischenschicht unmittelbar an das Bändchengewebe und eine zweite Zwischenschicht unmittelbar an die Innenfolie oder an die Beschichtung aus Acrylat anschließt.

Eine solche Ausgestaltung hat den Vorteil, dass das Material der einzelnen Zwischenschichten im Hinblick auf eine optimale Verbundhaftung unmittelbar an das Material der anliegenden Schichten angepasst werden kann. Somit ist eine solche Ausgestaltung besonders dann sinnvoll, wenn das Bändchengewebe und die Innenfolie aus unterschiedlichen Materialien gebildet sind, oder wenn eine der Zwischenschichten unmittelbar an der Beschichtung aus Acrylat anschließt. Zwischen den einzelnen Zwischenschichten bildet sich eine stoffschlüssige Verbindung aus. Insgesamt kann somit die Verbundhaftung gegenüber nur einer Zwischenschicht optimiert werden. Hierbei hat sich besonders vorteilhaft ein Polypropylen-Copolymer als erste Zwischenschicht und ein Terpolymer als zweite Zwischenschicht herausgestellt. Demnach liegt die Zwischenschicht aus dem Polypropylen-Copolymer an dem Bändchengewebe und die Zwischenschicht aus Terpolymer unmittelbar an der Innen- bzw. Außenfolie aus einem orientierten Polyolefin, der Bedruckung oder der Beschichtung aus Acrylat an. Die einzelnen Zwischenschichten sind allerdings nicht auf diese beiden Polymerarten beschränkt, sondern können grundsätzlich auch entsprechend aus anderen Polymeren ausgewählt werden.

Sowohl die Innenfolie als auch die Außenfolie bestehen bevorzugt aus einem orientierten Polyolefin, wobei das Polyolefin vorzugsweise Polyethylen (PE) oder Polypropylen (PP) ist. Mit einer Orientierung ist im Rahmen der Erfindung die im Wesentlichen in gleiche Richtung verlaufene Ausrichtung von Polymerfäden gemeint. Eine solche Orientierung kann beispielsweise dadurch erreicht werden, dass die Folie in eine oder mehrere Richtungen gereckt wird. Sofern die Folie nur in eine Richtung gereckt wird, können sich die Polymerfäden entsprechend nur in dieser Richtung orientieren, wobei dann von einer axialen Orientierung die Rede ist. Sowohl die Innen- als auch die Außenfolie sind jedoch vorzugsweise biaxial orientiert, wobei dann die Folien in zwei zueinander senkrecht stehenden Richtungen gereckt werden. Durch die Orientierung wird erreicht, dass die Folien in den entsprechenden Orientierungsrichtungen eine große Zugfestigkeit aufweisen, wobei bei einer entsprechenden biaxialen Orientierung diese Zugfestigkeit in beiden zueinander senkrecht stehenden Richtungen besonders hoch ist.

Gegenstand der Erfindung ist aber nicht nur eine Verpackung gemäß Anspruch 1, sondern auch eine Verwendung einer Acrylatschicht in einem Verpackungsbeutel zur Verpackung von Tiernahrung als Barriereschicht gegen das Eindringen von Insekten gemäß Anspruch 11. Eine derartige Acrylatschicht kann hierbei unabhängig von der konkreten Ausgestaltung eines Verpackungsbeutels stets als Barriereschicht eingesetzt werden, wobei sowohl Kunststoffgewebeverbunde als auch klassische Folienverpackungen zum Einsatz kommen können.

Die Acrylatschicht kann hierbei sowohl in Form einer Beschichtung als auch beispielsweise in Form einer Coextrusionsschicht in einem Folienverbund für die Verpackung vorgesehen sein.

Insgesamt hat eine Acrylatschicht als Barriereschicht gegen das Eindringen von Insekten den Vorteil, dass bevorzugt auf zusätzliche polare Folienschichten, wie z. B. Polyethylenterephthalat (PET) verzichtet werden kann. Besonders bevorzugt stellt die Acrylatschicht die einzige polare Schicht dar.

Gegenüber anderen polaren Folienschichten hat eine Acrylatschicht darüber hinaus den wesentlichen Vorteil, dass der Verpackungsbeutel als sogenannte Einstoffverpackung hergestellt werden kann.

Unter einer Einstoffverpackung werden Verpackungen verstanden, die im Wesentlichen aus nur einem Material bzw. aus nur einem Polymer gebildet sind. Im vorliegenden Fall handelt es sich vorzugsweise um Einstoffverpackungen auf der Basis von Polyethylen oder Polypropylen. Demnach weisen bei einem Folienverbund alle Folienschichten dasselbe Material auf bzw. sind aus dem Material einer Gruppe wie insbesondere Polyethylen oder Polypropylen einschließlich deren Copolymere gebildet. Im Falle eines Kunststoffgewebeverbundes sind demnach auch das Bändchengewebe sowie die mit dem Bändchengewebe kaschierten Folienschichten ebenfalls aus demselben Material hergestellt. Derartige Einstoffverpackungen haben den Vorteil, dass sie besonders einfach recycelt werden können, da eine Trennung der einzelnen Folienschichten nicht erforderlich ist. Würde dagegen eine Folienschicht aus beispielsweise Polyethylenterephthalat als polare Barriereschicht in einen ansonsten unpolaren Folienverbund aus Polyethylen oder Polypropylen eingebettet, müsste die hieraus hergestellte Verpackung im Zuge des Recyclings in einem aufwendigen und kostenintensiven Prozess in die einzelnen Polymerbestandteile aufgespalten werden.

Durch Aufbringen einer dünnen Beschichtung aus Acrylat bzw. durch Einbinden einer dünnen Schicht aus Acrylat kann weiterhin von einer Einstoffverpackung ausgegangen werden, da das Acrylat nur einen sehr geringen Materialbeitrag leistet und keine für sich genommen selbstständig recycelbare Folienschicht darstellt. Darüber hinaus kann es sich bei den verwendeten Acrylaten auch um Copolymere auf Basis von Ethylen handeln, wobei der Acrylatanteil in diesem Copolymer im Vergleich zu dem gesamten Folienverbund sehr niedrig ist.

Durch das hohe Maß an Polarität der Acrylat enthaltenden Schicht bzw. der ansonsten sehr dünnen Beschichtung aus Acrylat wird im ausreichenden Maße eine Barriere gegenüber dem unpolaren Sekret der Insekten aufgebaut, sodass auf eine entsprechend dicke polare Folienschicht und auch auf ein für die Insekten abstoßendes Additiv verzichtet werden kann.

Gegenstand der Erfindung ist ferner ein Verfahren zur Herstellung eines Kunststoffgewebeverbundes für einen Verpackungsbeutel gemäß dem Anspruch 17. Demnach wird eine erste Folie zugeführt und mit einem Acrylat beschichtet, wobei anschließend ein Bändchengewebe zugeführt wird und die zumindest eine Folie über eine Zwischenschicht mit dem Bändchengewebe extrusionskaschiert wird. Die Beschichtung erfolgt durch Aufbringen einer flüssigen Schicht aus Acrylat auf die zumindest eine Folie, wobei die Schicht zunächst aushärtet, bevor die Extrusionskaschierung mit dem Bändchengewebe erfolgt. Die Zwischenschicht wird im Zuge dessen schmelzflüssig zwischen das Bändchengewebe und der zumindest einen Folie eingebracht.

Bevorzugt stellt die zumindest eine Folie eine Außenfolie dar, wobei die schmelzflüssige Zwischenschicht unmittelbar auf die Beschichtung aus Acrylat aufgebracht wird.

Alternativ wird die Außenfolie vor der Extrusionskaschierung bedruckt, wobei die Bedruckung vorzugsweise auf der Beschichtung aus Acrylat erfolgt. Demnach wird im Zuge der Extrusionskaschierung die schmelzflüssige Zwischenschicht auf die Bedruckung aufgebracht.

Gemäß einem alternativen Verfahren stellt die eine Folie eine Innenfolie dar, wobei die Innenfolie zugeführt wird und zumindest eine Seite, bevorzugt beide Seiten, mit einer flüssigen Schicht aus Acrylat beschichtet werden und wobei anschließend eine Außenfolie zugeführt und über eine Klebstoffschicht mit der Innenfolie verbunden wird. Auch hier härtet die Schicht bzw. härten die Schichten aus Acrylat zunächst aus, bevor die Klebstoffverbindung mit der Außenfolie erfolgt. Bevorzugt wird die Außenfolie zuvor mit einer Bedruckung versehen, wobei die Bedruckung an die Klebstoffschicht anschließt. Abschließend wird ein Bändchengewebe zugeführt und über eine Zwischenschicht mit der Innenfolie extrusionskaschiert.

Im Folgenden wird die Erfindung anhand von lediglich exemplarischen Ausführungsbeispielen erläutert, es zeigen:
- Fig. 1: einen erfindungsgemäßen Verpackungsbeutel in einer perspektivischen, schematischen Darstellung,
- Fig. 2: einen Schichtaufbau des Kunststoffgewebeverbundes,
- Fig. 3: einen Schichtaufbau einer alternativen Ausgestaltung des Kunststoffgewebeverbundes
- Fig. 4: einen Schichtaufbau einer weiteren alternativen Ausgestaltung des Kunststoffgewebeverbundes

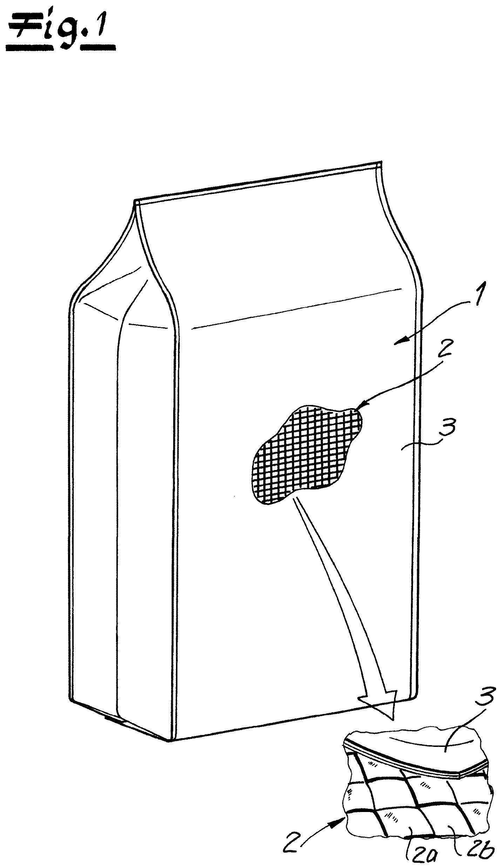

Die Fig. 1 zeigt rein exemplarisch einen aufgestellten und bereits befüllten Verpackungsbeutel, der aus einem Kunststoffgewebeverbund 1 gebildet ist. Der Ausschnitt zeigt hierbei das Bändchengewebe 2 aus sich kreuzenden Folienbändchen 2a und 2b. Dieses Bändchengewebe 2 ist innenliegend im Verpackungsbeutel angeordnet, wobei der Verpackungsbeutel gegenüber der Umgebung durch eine Außenfolie 3 dichtend abgeschottet ist. Die Außenfolie 3 besteht hierbei aus einem biaxial orientierten Polyolefin, z. B. Polypropylen oder Polyethylen. Die vergrößerte Darstellung des Ausschnittes zeigt darüber hinaus, dass neben dem Bändchengewebe 2 aus sich kreuzenden Folienbändchen 2a und 2b und der Außenfolie 3, die nach außen hin über dem Bändchengewebe 2 angeordnete Folie mehrschichtig ausgebildet ist, wobei die Außenfolie 3 die nach außen hin abschließende Lage darstellt.

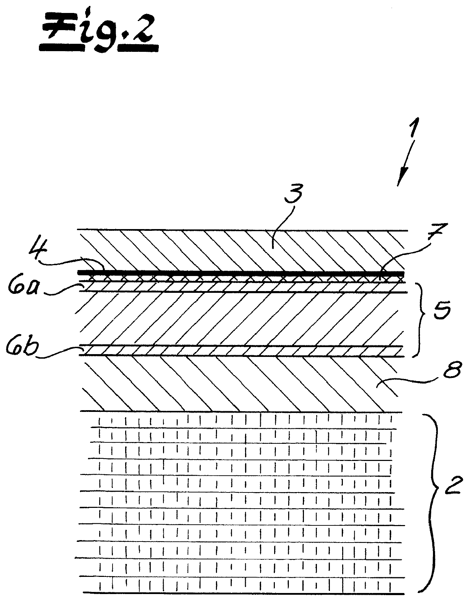

Der bereits in der Fig. 1 exemplarisch dargestellte Schichtaufbau geht besonders deutlich aus einer vergleichenden Ansicht mit der Fig. 2 hervor.

Die Fig. 2 zeigt den Schichtaufbau des Kunststoffgewebeverbundes 1 durch einen Querschnitt durch das Material. Innenliegend ist zunächst das Bändchengewebe 2 angeordnet, während die Außenfolie 3 die nach außen hin abschließende Schicht darstellt. Auf der innenliegenden Seite der Außenfolie 3 ist eine Bedruckung 4 vorgesehen, die unmittelbar auf die Außenfolie 3 aufgetragen wird.

Dadurch, dass die Bedruckung 4 auf der innenliegenden Seite der Außenfolie 3 angeordnet ist, wirkt die Außenfolie 3 selbst gegenüber der Bedruckung 4 als Schutzschicht, die eine Beschädigung oder einen Abtrag der Bedruckung 4 verhindert. Hierdurch wird sichergestellt, dass beispielsweise durch einen Transport oder durch eine längerfristige Lagerung das optische Erscheinungsbild des Verpackungsbeutels nicht beeinträchtigt wird, da dieses optische Erscheinungsbild einen wesentlichen Aspekt bei der Kaufentscheidung von Verbrauchern darstellt.

Zwischen der Außenfolie 3 mit der Bedruckung 4 und dem Bändchengewebe 2 ist ferner eine Innenfolie 5 vorgesehen, die wie auch die Außenfolie 3 aus einem orientierten Polyolefin, z. B. Polyethylen oder Polypropylen, gebildet ist. Diese Innenfolie 5 weist eine beidseitige Beschichtung 6a, 6b mit einem Acrylat auf, sodass diese Innenfolie 5 als Trägermaterial für die Beschichtungen 6a, 6b wirkt. Die Beschichtung aus Acrylat 6a ist hierbei auf einer der Außenfolie 3 zugewandten Seite und die Beschichtung 6b auf einer dem Bändchengewebe 2 zugewandten Seite der Innenfolie 5 angeordnet. Die Beschichtungen 6a, 6b aus Acrylat bewirken, dass die an sich aus einem unpolaren Polymer hergestellte Innenfolie 5 eine beidseitige Schicht aus einem polaren Material - nämlich Acrylat - aufweist. Mit Hilfe einer solchen polaren Beschichtung 6a, 6b aus Acrylat kann verhindert werden, dass eine durchlässige Beschädigung aufgrund von unpolaren Lösungsmitteln des Kunststoffgewebeverbundes 1 verhindert wird. Grundsätzlich können nämlich nur unpolare Lösungsmittel eine unpolare Folienschicht und nur polare Lösungsmittel eine polare Folienschicht auflösen, sodass beispielsweise bei einem unpolaren Lösungsmittel spätestens an der Beschichtung 6a, 6b der Auflösungsprozess gestoppt würde.

Sollte beispielsweise daher ein Insekt ein unpolares Sekret auf der Außenfolie 3 aussondern, so würde dies zwar zu einer lokalen Beschädigung der Außenfolie 3 führen. Spätestens an der Beschichtung 6a könnte dann aber eine Auflösung des Kunststoffgewebeverbundes 1 gestoppt werden, sodass ein Eindringen dieses Insektes in den Innenraum des Verpackungsbeutels verhindert würde.

Durch die zweite Beschichtung 6b wird ferner eine doppelte Sicherheit geschaffen, sofern beispielsweise die Beschichtung 6a durch andere, z. B. mechanische Einflüsse lokal beschädigt würde. In diesem Fall könnten die Insekten zwar eine Beschädigung der Innenfolie 5 herbeiführen. Spätestens an der Beschichtung 6b würde dann der Auflösungsprozess jedoch gestoppt.

Um die Außenfolie 3 mit der Innenfolie 5 zu verbinden, ist ferner eine Klebstoffschicht 7 vorgesehen, die beide Folien 3, 5 miteinander verbindet. Da die Innenfolie 5 beidseitig eine Beschichtung 6a, 6b aus Acrylat und die Außenfolie 3 eine innenliegende Bedruckung 4 aufweist, ist die Klebstoffschicht 7 zwischen der Bedruckung 4 und der außenliegenden Beschichtung aus Acrylat 6a angeordnet.

Nachdem der Folienverbund bestehend aus der Außenfolie 3, der Bedruckung 4, der Klebstoffschicht 7, der Beschichtung 6a, der Innenfolie 5 und der Beschichtung 6b hergestellt wurde, wird dieser an dem Bändchengewebe 2 befestigt. Hierzu ist eine Zwischenschicht 8 vorgesehen, über die eine Extrusionskaschierung des Folienverbundes mit dem Bändchengewebe 2 erfolgt. Hierzu wird das Material der Zwischenschicht 8 schmelzflüssig zwischen dem Folienverbund und dem Bändchengewebe 2 eingebracht und unter beidseitigem Aufbringen von Druck abgekühlt, sodass sich das zunächst schmelzflüssige Material der Zwischenschicht 8 verfestigt. Dies führt zu einer Verbundhaftung des Folienverbundes mit dem Bändchengewebe 2, sodass sich hierdurch der gesamte Kunststoffgewebeverbund 1 ausbilden kann. Eine zusätzliche Verbundhaftung wird dadurch erzielt, dass die Zwischenschicht 8 im schmelzflüssigen Zustand zumindest abschnittsweise in der Bändchengewebe 2 eindringt, wodurch die Kontaktfläche zwischen der Zwischenschicht 8 und dem Bändchengewebe 2 vergrößert wird.

Als Material für die Zwischenschicht 8 eignet sich insbesondere Polypropylen, sodass sowohl die Außenfolie 3, die Innenfolie 5 und die Zwischenschicht 8 aus dem gleichen Material hergestellt werden können. Auch für die Folienstreifen 2a, 2b des Bändchengewebes 2 wird vorzugsweise Polypropylen verwendet, sodass grundsätzlich eine sogenannte Einstoffverpackung gebildet werden kann. Da sowohl die Bedruckung 4 als auch die Klebstoffschicht 7 und die Beschichtungen 6a, 6b besonders dünn ausgebildet sind, tragen sie nur in sehr geringem Maße Anteil an dem gesamten Material des Kunststoffgewebeverbundes 1. Somit wird eine solche Verpackung bzw. ein solcher Verpackungsbeutel noch immer als Einstoffverpackung bezeichnet. Dies hat besondere Vorteile bei dem Recyclingprozess, da eine Auftrennung der einzelnen Polymerbestandteile nicht erforderlich ist. Dennoch werden durch die dünnen Beschichtungen 6a, 6b aus Acrylat eine polare Barriereschicht bzw. polare Barriereschichten in den Kunststoffgewebeverbund 1 eingebettet, die ein Eindringen von Insekten wirksam verhindern.

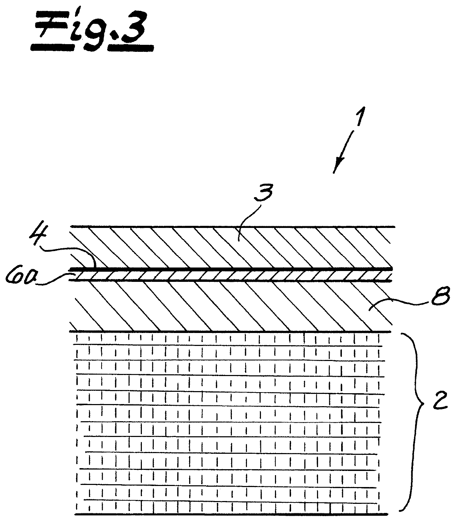

Die Fig. 3 zeigt diesbezüglich eine alternative Ausgestaltungsform des Kunststoffgewebeverbundes 1, bei dem auf eine Innenfolie 5 als Trägermaterial für die Beschichtungen 6a, 6b verzichtet wurde. Die Beschichtung 6a erfolgt hierbei unmittelbar auf der Außenfolie 3, wobei zunächst eine Bedruckung 4 auf der Außenfolie 3 und erst auf dieser Bedruckung 4 die Beschichtung aus Acrylat 6a angeordnet ist. Die Beschichtung 6a kann beispielsweise eine bedruckte, vollflächige Schicht eines Acrylat-Lackes sein.

Durch das Fehlen der Innenfolie 5 kann auch auf eine Klebstoffschicht 7 verzichtet werden, sodass die Außenfolie 3 mit der Bedruckung 4 und der Beschichtung aus Acrylat 6a unmittelbar über eine Zwischenschicht 8 mit dem Bändchengewebe 2 extrusionskaschiert werden.

Hierbei ist allerdings darauf zu achten, dass die Zwischenschicht 8 die Beschichtung aus Acrylat 6a nicht beschädigt, da im Gegensatz zu der in Fig. 2 gezeigten Ausgestaltung keine zweite Barriereschicht bzw. keine zweite Beschichtung aus Acrylat 6b vorhanden ist. Allerdings ist im Gegensatz zu der in Fig. 2 gezeigten Ausgestaltung der Herstellungsprozess einfacher und der Materialeinsatz geringer.

Denkbar ist darüber hinaus auch, dass die Zwischenschicht 8 nicht einlagig, sondern zweilagig mit einer ersten Zwischenschicht und einer zweiten Zwischenschicht ausgebildet ist, wobei dann die einzelnen Zwischenschichten unmittelbar an das daran anliegende Material angepasst werden können, sodass sich eine möglichst gute Verbundhaftung zwischen den einzelnen Zwischenschichten und dem anliegenden Material ausbildet.

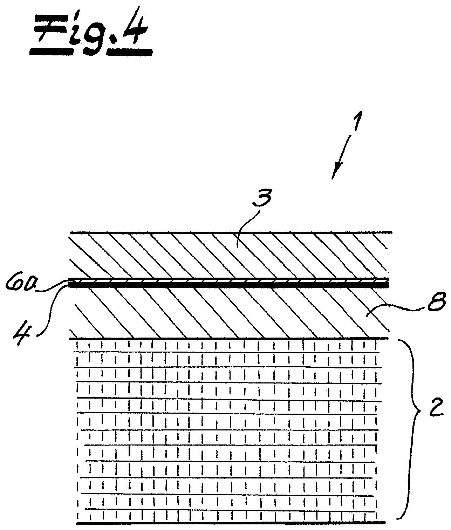

Die Fig. 4 zeigt den Schichtaufbau einer weiteren alternativen Ausgestaltungsform. Die einzelnen Schichten stimmen hierbei mit der Ausgestaltungsform gemäß der Fig. 3 überein, allerdings unterscheiden sich die Ausgestaltungen in der Schichtreihenfolge. Demnach schließt die Beschichtung aus Acrylat 6a unmittelbar an die Außenfolie 3 an. Die Bedruckung 4 ist nicht unmittelbar auf der Außenfolie 3 vorgesehen sondern auf der Beschichtung 6a. Bei der Herstellung wird somit zunächst die Beschichtung 6a auf die Außenfolie 3 aufgebracht. Dies kann zum Beispiel über das Aufbringen eines Acrylat-Lacks erfolgen. Alternativ sind die Außenfolie 3 und Beschichtung aus Acrylat 6a coextrudiert. Erst im Anschluss erfolgt die Bedruckung 4. Sodann wird die Außenfolie 3 mit der Beschichtung aus Acrylat 6a und der Bedruckung 4 über eine Zwischenschicht 8 auf dem Bändchengewebe 2 befestigt, wobei auch hier die Zwischenschicht 8 eine Extrusionsschicht darstellt, über die die Außenfolie 3 mit dem Bändchengewebe 2 extrusionskaschiert wird.

## Patentansprüche

1. Verpackungsbeutel aus einem Kunststoffgewebeverbund (1) mit einem aus sich kreuzenden Folienbändchen (2a, 2b) gebildeten Bändchengewebe (2) und mit einer Außenfolie (3) aus orientiertem Polyolefin,
**dadurch gekennzeichnet, dass**
- in den Kunststoffgewebeverbund (1) eine Beschichtung aus Acrylat (6a, 6b) eingebunden ist,
- wobei die Beschichtung (6a, 6b) auf der Außenfolie (3) angeordnet ist, oder
- zwischen der Außenfolie (3) und dem Bändchengewebe (2) eine Innenfolie (5) aus orientiertem Polyolefin vorgesehen und die Beschichtung (6a, 6b) zumindest auf einer der Außenfolie (3) zugewandten Seite der Innenfolie (5) angeordnet ist.

2. Verpackungsbeutel nach Anspruch 1, **dadurch gekennzeichnet, dass** die Beschichtung aus Acrylat (6a, 6b) zwischen der Außenfolie (3) und dem Bändchengewebe (2) angeordnet ist.

3. Verpackungsbeutel nach Anspruch 1 oder 2, **dadurch gekennzeichnet, dass** die Außenfolie (3) und das Bändchengewebe (2) durch zumindest eine Zwischenschicht (8) extrusionskaschiert sind.

4. Verpackungsbeutel nach einem der Ansprüche 1 bis 3, **dadurch gekennzeichnet, dass** die Außenfolie (3) auf einer dem Bändchengewebe (2) zugewandten Seite eine Bedruckung (4) aufweist.

5. Verpackungsbeutel nach Anspruch 4, **dadurch gekennzeichnet, dass** die Bedruckung (4) auf der Beschichtung aus Acrylat (6a, 6b) angeordnet ist.

6. Verpackungsbeutel nach einem der Ansprüche 1 bis 5, durch gekennzeichnet, dass die Beschichtung (6a, 6b) auf beiden Seiten der Innenfolie (5) angeordnet ist.

7. Verpackungsbeutel nach einem der Ansprüche 1 bis 6, **dadurch gekennzeichnet, dass** zwischen der Innenfolie (5) und der Außenfolie (3) oder zwischen der Beschichtung (6a, 6b) und der Außenfolie (3) eine Klebstoffschicht (7) angeordnet ist.

8. Verpackungsbeutel nach einem der Ansprüche 1 bis 7, **dadurch gekennzeichnet, dass** die Außenfolie (3) und das Bändchengewebe (2) durch zwei Zwischenschichten extrusionskaschiert sind, wobei eine erste Zwischenschicht unmittelbar an das Bändchengewebe (2) und eine zweite Zwischenschicht unmittelbar an die Beschichtung (6a, 6b) oder an die Innenfolie (5) anschließt.

9. Verpackungsbeutel nach Anspruch 8, **dadurch gekennzeichnet, dass** die erste Zwischenschicht aus einem Polypropylen-Copolymer und die zweite Zwischenschicht aus einem Terpolymer gebildet ist.

10. Verpackungsbeutel nach einem der Ansprüche 1 bis 9, **dadurch gekennzeichnet, dass** das orientierte Polyolefin der Innenfolie (5) und/oder der Außenfolie (3) biaxial orientiert ist.

11. Verpackungsbeutel nach einem der Ansprüche 1 bis 10, **dadurch gekennzeichnet, dass** das orientierte Polyolefin der Innenfolie (5) und/oder der Außenfolie (3) Polypropylen ist.

12. Verpackungsbeutel nach einem der Ansprüche 1 bis 11, **dadurch gekennzeichnet, dass** die Folienbändchen (2a, 2b) des Bändchengewebes (2) aus Polypropylen gebildet sind.

13. Verwendung einer Acrylatschicht (6a, 6b) in einem Verpackungsbeutel zur Verpackung von Tiernahrung als Barriereschicht gegen das Eindringen von Insekten.

14. Verwendung nach Anspruch 13, mit der Maßgabe, dass die Acrylatschicht (6a, 6b) die einzige polare Barriereschicht ist.

15. Verwendung nach Anspruch 13 oder 14, mit der Maßgabe, dass der Verpackungsbeutel ein Einstoffbeutel ist.

16. Verwendung nach einem der Ansprüche 13 bis 15, mit der Maßgabe, dass der Verpackungsbeutel auf der Basis von Polyethylen oder Polypropylen gebildet ist.

17. Verfahren zur Herstellung eines Kunststoffgewebeverbund (1) für einen Verpackungsbeutel nach einem der Ansprüche 1 bis 12, wobei eine erste Folie zugeführt und zumindest auf einer Seite mit einem Acrylat beschichtet wird, wobei anschließend ein Bändchengewebe (2) zugeführt und die eine Folie über eine Zwischenschicht (8) mit dem Bändchengewebe (2) extrusionskaschiert wird.
